# EUROPÄISCHE PATENTSCHRIFT

(11) **EP 1 468 880 B1**
(45) Veröffentlichungstag und Bekanntmachung des Hinweises auf die Patenterteilung: **22.02.2006**
(21) Anmeldenummer: 04006899.1
(22) Anmeldetag: 23.03.2004
(51) Int. Cl.: B60R 22/20

(54) **Sicherheitsgurtanordnung für ein Fahrzeug**
Vehicle seat belt system
Dispositif de ceinture de sécurité pour véhicule

(30) Priorität: 15.04.2003 DE 10317221
(43) Veröffentlichungstag der Anmeldung: 20.10.2004
(73) Patentinhaber: Bayerische Motoren Werke Aktiengesellschaft, 80809 München (DE)
(72) Erfinder: Sertl, Hans-Peter, 80939 München (DE)

(56) Entgegenhaltungen:
- EP-A- 0 494 009
- DE-A- 3 719 656
- DE-A- 10 132 873
- FR-A- 2 829 084
- US-B1- 6 234 529

## Beschreibung

Die vorliegende Erfindung betrifft eine Sicherheitsgurtanordnung für ein Fahrzeug gemäß dem Oberbegriff des Patentanspruches 1.

Fahrzeuge mit drei oder mehr Sitzreihen, häufig auch Vans genannt, erfreuen sich zunehmender Beliebtheit. Üblicherweise ist bei diesen Fahrzeugen für jeden Sitz ein Sicherheitsgurtsystem ortsfest im Fahrzeug installiert bzw. so angeordnet, dass es ein Verschieben des Fahrzeugsitzes in begrenztem Umfang ähnlich wie bei herkömmlichen Pkw-Vordersitzen zulässt. Von hochpreisigen Cabrios bzw. Sportcoupes sind Sicherheitsgurtsysteme bekannt, bei denen das komplette Gurtssystem einschließlich des Gurtaufrollautomaten in den Fahrzeugsitz integriert ist und zusammen mit dem Fahrzeugsitz verschiebbar ist. Derartige Sicherheitsgurtsysteme ermöglichen zwar eine hohe Flexibilität hinsichtlich der Sitzverschiebung. Sie erfordern jedoch eine sehr steife und somit schwere Sitzkonstruktion und scheiden daher bei vielen Fahrzeugen aus Kostengründen aus.

Insbesondere bei Vans und Sport-Utility-Vehicles (SUV) erwartet der Kunde eine hohe Innenraumflexibilität. Einzelne Sitze sollen bei Bedarf herausnehmbar und/oder weiträumig im Fahrzeug verschiebbar angeordnet sein. Bei Fahrzeugen mit drei Sitzreihen besteht häufig der Wunsch, dass Sitze der zweiten und dritten Sitzreihe querverschiebbar und zusätzlich zwischen der zweiten und dritten Sitzreihe hin und her verschiebbar angeordnet sind. Sicherheitsgurtsysteme, die im wesentlichen räumlich fest im Fahrzeug angeordnet sind, sind für Fahrzeuge, bei denen einzelne Sitze zwischen zwei Sitzreihen hin und her verschiebbar sind, nicht geeignet. Zudem besteht bei Sicherheitsgurtsystemen, die im wesentlichen fahrzeugfest angeordnet sind, das Problem, dass bei einer Sitzverschiebung in Fahrzeugquerrichtung der Sicherheitsgurt nicht in allen Sitzpositionen optimal am Fahrgast anliegt.

Aus der DE 37 15 538 C2 ist eine Sicherheitsgurtanordnung für ein Fahrzeug bekannt, bei der das obere Ende des Brustabschnitts des Sicherheitsgurtes an einem Gurtanlenkelement befestigt ist, das in einem schienenartigen Halteelement in Fahrzeuglängsrichtung verschiebbar ist. Das schienenartige Halteelement ist im Bereich des Dachholms an der Fahrzeugkarosserie befestigt. Für eine Verschiebung des Fahrzeugsitzes zwischen zwei Sitzreihen ist dieses System jedoch nicht geeignet.

Aufgabe der Erfindung ist es, eine Sicherheitsgurtanordnung für Fahrzeuge zu schaffen, die auch bei einer Verschiebung des Fahrzeugsitzes zwischen zwei Sitzreihen eine möglichst gute Positionierung des Sicherheitsgurtes am Insassen ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Sicherheitsgurtanordnung für ein Fahrzeug aus, das eine "vordere Sitzreihe" und eine "hintere Sitzreihe" aufweist. Die Begriffe "vordere Sitzreihe" und "hintere Sitzreihe" sind ganz allgemein im Sinne zweier hintereinander angeordneter Sitzreihen zu verstehen. Bei einem Fahrzeug mit drei Sitzreihen kann die vordere Sitzreihe beispielsweise die zweite und die hintere Sitzreihe die dritte Sitzreihe sein. Ferner ist ein Sicherheitsgurt, vorzugsweise ein Dreipunktgurt vorgesehen, der einen Brustabschnitt aufweist, welcher sich im angeschnallten Zustand vom Beckenbereich des Fahrgasts über dessen Schulterbereich zu einem Gurtanlenkelement erstreckt. Das "Gurtanlenkelement" kann ein Gurtumlenker sein, wie bei den meisten Pkw-Sicherheitsgurtsystemen, der den Sicherheitsgurt zu einem Gurtaufrollautomat umlenkt. Alternativ dazu kann das Gurtumlenkelement auch unmittelbar durch einen Gurtaufrollautomat gebildet sein. Das Gurtanlenkelement ist entlang eines schienenartigen Halteelements verschiebbar und in verschiedenen Verschiebestellungen entsprechend zugeordneten Positionen eines verschiebbaren Fahrzeugsitzes fixierbar. Vorzugsweise ist das Halteelement stufenlos verschiebbar und fixierbar.

Der Kern der Erfindung besteht darin, dass sich das schienenartige Halteelement primär in Fahrzeuglängsrichtung erstreckt und so lange ist, dass die Sicherheitsgurtanordnung für einen Fahrzeugsitz geeignet ist, der zwischen der vorderen und hinteren Sitzreihe verschiebbar ist. Das Gurtanlenkelement, das verschiebbar und fixierbar an dem Halteelement angeordnet ist, ist also zwischen einer vorderen Verschiebestellung, die einer Sitzposition in der vorderen Sitzreihe zugeordnet ist, und einer hinteren Verschiebestellung, die einer Sitzposition in der hinteren Sitzreihe zugeordnet ist, verschiebbar.

Das schienenartige Halteelement ist vorzugsweise an der Dachkonstruktion des Fahrzeugs befestigt. Alternativ dazu kann es aber auch im Brüstungsbereich, insbesondere an Karosserieelementen der Karosserieseitenwand befestigt sein.

Nach einer Weiterbildung der Erfindung ist es vorteilhaft das Halteelement schräg in Bezug auf die Fahrzeuglängsrichtung anzuordnen und zwar derart, dass es sich, von vorne nach hinten gesehen, schräg zur Fahrzeugmitte hin erstreckt. Bei Fahrzeugen mit drei Sitzreihen befinden sich üblicherweise im Bereich der dritten Sitzreihe die Radkästen. Die Sitze der dritten Sitzreihe müssen daher bauraumbedingt näher zur Fahrzeugmitte hin angeordnet sein als die Sitze in der zweiten Sitzreihe. Um bei einer Verschiebung eines Sitzes aus der zweiten in die dritte Sitzreihe in allen Sitzpositionen eine möglichst gute Gurtgeometrie zu erreichen, sollte der Abstand zwischen dem Schulterbereich des Insassen und dem Gurtanlenkelement in allen Sitzpositionen im wesentlichen gleich sein, zumindest aber nicht all zu große Unterschiede aufweisen.

Beim Verschieben eines Fahrzeugsitzes aus der zweiten Sitzreihe in die dritte Sitzreihe wird der Fahrzeugsitz nicht nur in Fahrzeuglängsrichtung nach hinten sondern zusätzlich etwas nach innen verschoben. Dieser Querverschiebung wird man durch die schräge Anordnung des schienenartigen Haltelementes gerecht. Man erreicht dadurch für alle möglichen Sitzpositionen eine gute Gurtgeometrie.

Vorzugsweise ist eine Verstelleinrichtung vorgesehen, die bei einer Verstellung des Fahrzeugsitzes automatisch die Stellung des Gurtanlenkelements mitverstellt. Dies kann beispielsweise durch einen Seilzugmechanismus erreicht werden. Alternativ dazu kann das Gurtanlenkelement auch durch eine elektrische Verstelleinrichtung mitverstellt werden. Entsprechend den einzelnen möglichen Sitzpositionen kann in einer Elektronik ein Kennfeld hinterlegt sein, das jeder Sitzposition eindeutig eine Position des Gurtanlenkelementes zuordnet.

Im folgenden wir die Erfindung im Zusammenhang mit der Zeichnung näher erläutert. Es zeigen:
- Figur 1: das Grundprinzip der Erfindung in Draufsicht; und
- Figur 2: die Sicherheitsgurtanordnung der Figur 1 in Seitenansicht.

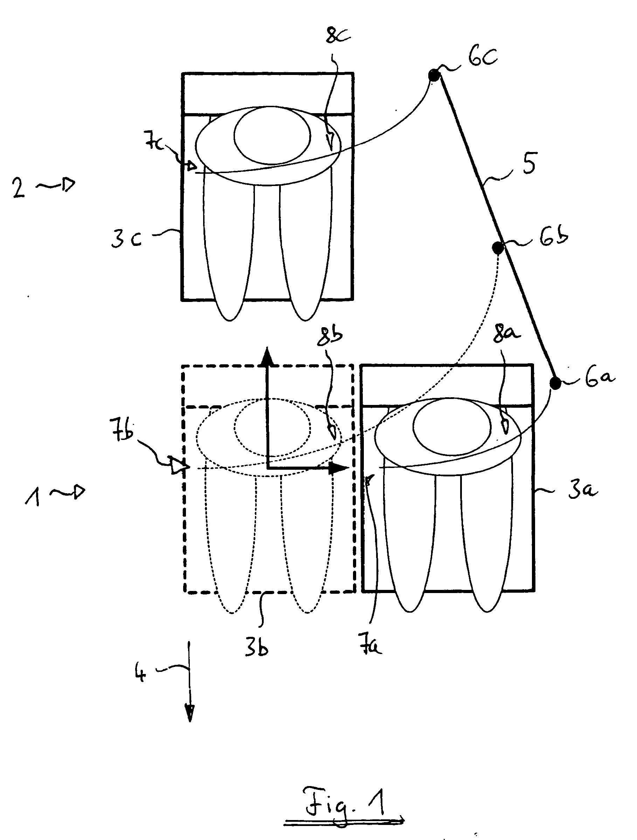

**Figur 1** zeigt schematisch einen Ausschnitt aus einem Fahrzeug mit einer vorderen Sitzreihe 1 und einer hinteren Sitzreihe 2 und einem Sitz, der zwischen verschiedenen Sitzpositionen hin und her verschiebbar ist. In Figur 1 sind drei verschiedene Sitzpositionen dargestellt, die mit 3a, 3b, 3c bezeichnet sind. Die Sitzposition 3a entspricht in Fahrtrichtung 4 gesehen einer Außenposition in der vorderen Sitzreihe 1, die Sitzposition 3b, einer zur Fahrzeugmitte hin eingerückten Sitzposition in der vorderen Sitzreihe 1 und die Sitzposition 3c einer Sitzposition in der hinteren Sitzreihe 2.

Ferner ist eine Halteschiene 5 vorgesehen, an der ein in Schienenlängsrichtung verschiebliches Gurtanlenkelement angeordnet ist, das hier in drei verschiedenen Positionen 6a, 6b, 6c dargestellt ist, die den Sitzpositionen 3a, 3b, 3c zugeordnet sind. Der Brustabschnitt des Sicherheitsgurtes erstreckt sich in den jeweiligen Sitzpositionen jeweils vom Beckenbereich 7a, 7b, 7c über den Schulterbereich 8a, 8b, 8c des Fahrgasts zum Gurtanlenkelement 6a, 6b, 6c.

Bei einer Querverschiebung des Fahrzeugsitzes von der Sitzposition 3a nach innen in die Sitzposition 3b in der vorderen Sitzreihe wird automatisch das Gurtanlenkelement von der vorderen Stellung 6a in eine mittlere Stellung 6b nach hinten verschoben. Dadurch wird sichergestellt, dass der Sicherheitsgurt bei einer Querverschiebung des Fahrzeugsitzes stets optimal im Schulterbereich 8a bzw. 8b des Fahrgasts anliegt.

Wenn der Fahrzeugsitz von der Sitzposition 3b in der vorderen Sitzreihe 1 in die Sitzposition 3c in der hinteren Sitzreihe 2 verschoben wird, wird automatisch das Gurtanlenkelement ebenfalls nach hinten mitverschoben in die hintere Stellung 6c. Somit wird auch bei einer Längsverschiebung des Sitzes in Fahrzeuglängsrichtung stets eine optimale Gurtgeometrie erreicht.

Es sei ausdrücklich darauf hingewiesen, dass die Halteschiene 5 nicht unbedingt ein gerades Haltelement sein muss. In Abhängigkeit von den Verschiebemöglichkeiten des zugeordneten Fahrzeugsitzes kann es auch gekrümmt sein. Wesentlich ist, dass die Anordnung, die Länge und die Form des Haltelementes so auf die möglichen Verschiebepositionen des Fahrzeugsitzes abgestimmt sind, dass in jeder Sitzposition eine möglichst optimale Anlage des Sicherheitsgurtes am Oberkörper des Fahrgasts erreicht wird, wie dies in **Figur 1** dargestellt ist.

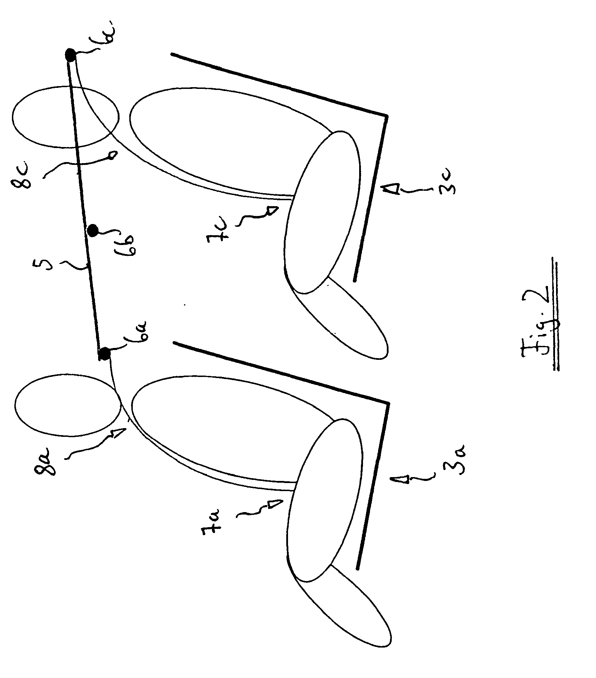

**Figur 2** zeigt die Sicherheitsgurtanordnung der **Figur 1** in Seitenansicht und zwar die Sitzpositionen 3a und 3c (vgl. **Figur 1**). Ferner sind die Stellungen 6a - 6c des Gurtanlenkelementes für alle drei in **Figur 1** gezeigten Sitzpositionen dargestellt. Wie aus **Figur 2** ersichtlich ist, ist die Halteschiene 5 auch in Seitenansicht schräg angeordnet und zwar von vorne nach hinten in Fahrzeuglängsrichtung gesehen ansteigend. Es ist ersichtlich, dass der Sicherheitsgurt sowohl im Beckenbereich 7a bzw. 7c als auch im Schulterbereich 8a bzw. 8c in den Sitzpositionen 3a, 3c jeweils optimal am Insassen anliegt.

## Patentansprüche

1. Sicherheitsgurtanordnung für ein Fahrzeug mit einer vorderen Sitzreihe (1) und einer hinteren Sitzreihe (2),
einem Sicherheitsgurt, der einen Brustabschnitt aufweist, der sich im angeschnallten Zustand vom Beckenbereich (7a - 7c) eines Insassen über dessen Schulterbereich (8a - 8c) zu einem Gurtanlenkelement (6a - 6c) erstreckt, das entlang einen schienenartigen Halteelementes (5) verschiebbar und in verschiedenen Verschiebestellungen fixierbar ist, entsprechend zugeordneten Positionen eines verschiebbaren Fahrzeugsitzes,
**dadurch gekennzeichnet, dass**
der Fahrzeugsitz mindestens zwischen der vorderen und der hinteren Sitzreihe (1,2) verschiebbar ist und das Halteelement (5) sich primär in Fahrzeuglängsrichtung (4) erstreckt und so lange ist, dass das Gurtanlenkelement (6a - 6c) zwischen einer vorderen Verschiebestellung (6a), die einer Sitzposition (3a) in der vorderen Sitzreihe (1) zugeordnet ist, und einer hinteren Verschiebestellung (6c), die einer Sitzposition (3c) in der hinteren Sitzreihe (2) zugeordnet ist, verschiebbar ist.

2. Sicherheitsgurtanordnung nach Anspruch 1, wobei das Halteelement (5) an der Dachkonstruktion des Fahrzeugs befestigt ist.

3. Sicherheitsgurtanordnung nach Anspruch 1 oder 2, wobei sich das Halteelement (5) in Bezug auf die Fahrzeuglängsrichtung (4) schräg nach hinten erstreckt und zwar, von vorne nach hinten gesehen, schräg zur Fahrzeugmitte hin.

4. Sicherheitsgurtanordnung nach einem der Ansprüche 1 bis 3, wobei das Gurtanlenkelement (6a - 6c) ein Gurtumlenker ist, der den Sicherheitsgurt vom Dachbereich zu einem Gurtaufrollautomat hin umlenkt.

5. Sicherheitsgurtanordnung nach einem der Ansprüche 1 bis 3, wobei das Gurtanlenkelement (6a - 6c) ein Gurtaufrollautomat ist.

6. Sicherheitsgurtanordnung nach einem der Ansprüche 1 bis 5, wobei eine Verstelleinrichtung vorgesehen ist, welche bei einer Verstellung des Fahrzeugsitzes die Stellung des Gurtanlenkelements entsprechend anpasst.

7. Sicherheitsgurtanordnung nach einem der Ansprüche 1 bis 6, wobei der Fahrzeugsitz zumindest in der vorderen Sitzreihe (1) quer zur Fahrzeuglängsrichtung (4) verschiebbar ist, wobei die Verstelleinrichtung auch bei einer Querverschiebung des Fahrzeugsitzes die Stellung des Gurtanlenkelements (6a - 6c) durch eine Verschiebung entlang des Halteelements (5) anpasst.

8. Sicherheitsgurtanordnung nach einem der Ansprüche 1 oder 3 - 7, wobei das Halteelement (5) an Karosserieseitenteilen des Fahrzeugs befestigt ist.

## Claims

1. A safety belt arrangement for a vehicle with a front row of seats (1) and a rear row of seats (2) and
a safety belt comprising a chest portion which when buckled extends from an occupant's lap region (7a - 7c) over his shoulder (8a - 8c) to a belt fastening element (6a - 6c) which is movable along a rail-like retaining element (5) and is fixable in various positions corresponding to associated positions of a movable seat,
**characterised in that**
the seat is movable at least between the front and the rear row (1, 2) and the retaining element (5) extends mainly in the longitudinal direction (4) of the seat and has a length such that the belt fastening element (6a - 6c) is movable between a front position (6a) associated with a seat position (3a) in the front row (1) and a rear position (6c) associated with a seat position (3c) in the rear row (2).

2. A safety belt arrangement according to claim 1, wherein the retaining element (5) is fastened to the vehicle roof construction.

3. A safety belt arrangement according to claim 1 or claim 2, wherein the retaining element (5), relative to the longitudinal direction (4) of the vehicle, slopes backwards at an angle to the centre of the vehicle, considered from front to back.

4. A safety belt arrangement according to any of claims 1 to 3, wherein the belt fastening element (6a - 6c) is a belt guide which guides the safety belt from the roof region to a retractor.

5. A safety belt arrangement according to any of claims 1 to 3, wherein the belt fastening element (6a - 6c) is a retractor.

6. A safety belt arrangement according to any of claims 1 to 5, wherein an adjusting device is provided and adjusts the position of the belt fastening element as required when the seat is moved.

7. A safety belt arrangement according to any of claims 1 to 6, wherein the seat, at least in the front row (1), is movable transversely to the longitudinal direction (4) of the seat, wherein even if the seat is moved transversely the adjustment device adapts the position of the belt fastening element (6a - 6c) by moving along the retaining element (5).

8. A safety belt arrangement according to any of claims 1 or 3 - 7, **characterised in that** the retaining element (5) is fastened to side parts of the vehicle body.

## Revendications

1. Dispositif de ceinture de sécurité pour un véhicule avec une rangée de sièges avant (1) et une rangée de sièges arrière (2), une ceinture de sécurité présentant une partie thoracique qui s'étend à l'état attaché de la région du bassin (7a - 7c) d'un passager au-dessus de la région d'épaule (8a - 8c) de celui-ci jusqu'à un élément d'articulation de ceinture (6a - 6c) qui peut être déplacé le long d'un élément de maintien (5) en forme de rail et fixé dans différentes positions de déplacement selon des positions associées d'un siège de véhicule déplaçable,
**caractérisé en ce que**
le siège de véhicule est déplaçable au moins entre les rangées de sièges avant et arrière (1, 2), et l'élément de maintien (5) s'étend principalement dans la direction longitudinale du véhicule (4) et présente une longueur suffisante pour pouvoir déplacer l'élément d'articulation de ceinture (6a - 6c) entre une position de déplacement avant (6a) associée à une position de siège (3a) dans la rangée de sièges avant (1), et une position de déplacement arrière (6c) associée à une position de siège (3c) dans la rangée de sièges arrière (2).

2. Dispositif de ceinture de sécurité selon la revendication 1,
**caractérisé en ce que**
l'élément de maintien (5) est fixé à la construction de toit du véhicule.

3. Dispositif de ceinture de sécurité selon la revendication 1 ou 2,
**caractérisé en ce que**
l'élément de maintien (5) s'étend de manière inclinée vers l'arrière par rapport à la direction longitudinale du véhicule (4), à savoir, vu de l'avant vers l'arrière, en biais vers le centre du véhicule.

4. Dispositif de ceinture de sécurité selon l'une quelconque des revendications 1 à 3,
**caractérisé en ce que**
l'élément d'articulation de ceinture (6a - 6c) est un renvoi de ceinture qui renvoie la ceinture de sécurité de la zone du toit vers un automatisme d'enroulement de ceinture.

5. Dispositif de ceinture de sécurité selon l'une quelconque des revendications 1 à 3,
**caractérisé en ce que**
l'élément d'articulation de ceinture (6a - 6c) est un automatisme d'enroulement de ceinture.

6. Dispositif de ceinture de sécurité selon l'une quelconque des revendications 1 à 5,
**caractérisé en ce que**
lors d'un déplacement du siège de véhicule un dispositif de réglage adapte la position de l'élément d'articulation de ceinture en conséquence.

7. Dispositif de ceinture de sécurité selon l'une quelconque des revendications 1 à 6,
**caractérisé en ce que**
le siège de véhicule, du moins dans la rangée de sièges avant (1), est déplaçable transversalement à la direction longitudinale du véhicule (4), et le dispositif de réglage adapte la position de l'élément d'articulation de ceinture (6a - 6c) par un déplacement le long de l'élément de maintien (5), même lors d'un déplacement transversal du siège de véhicule.

8. Dispositif de ceinture de sécurité selon l'une quelconque des revendications 1 ou 3 à 7,
**caractérisé en ce que**
l'élément de maintien (5) est fixé à des parties latérales de la carrosserie du véhicule.
